**Europäisches Patentamt**

**European Patent Office**

**Office européen des brevets**

(19)

(11) Publication number : **0 415 431 B1**

# EUROPEAN PATENT SPECIFICATION

(12)

(45) Date of publication of patent specification :
**13.12.95 Bulletin 95/50**

(51) Int. Cl.⁶ : **G11B 5/64**

(21) Application number : **90116699.1**

(22) Date of filing : **30.08.90**

(54) **Magnetic recording medium**

(30) Priority : **30.08.89 JP 224061/89**

(43) Date of publication of application :
**06.03.91 Bulletin 91/10**

(45) Publication of the grant of the patent :
**13.12.95 Bulletin 95/50**

(84) Designated Contracting States :
**DE FR GB**

(56) References cited :
EP-A- 0 167 118
EP-A- 0 261 240
EP-A- 0 330 116
DE-A- 3 216 863
DE-A- 3 710 477
PATENT ABSTRACTS OF JAPAN vol. 14, no.
255 (E-935) 31 May 1990, & JP-A-2 074012
(SONY CORP) 14 March 1990,
PATENT ABSTRACTS OF JAPAN vol. 13, no.
85 (P-834) 27 February 1989, & JP-A- 63 266626
(TOSHIBA CORP.) 2 November 1988,
PATENT ABSTRACTS OF JAPAN vol. 12, no.
192 (P-712) 4 June 1988, & JP-A- 62 298017
(NIPPON MINING CO LTD) 25 December 1987,

(73) Proprietor : **SONY CORPORATION**
**7-35, Kitashinagawa 6-chome**
**Shinagawa-ku**
**Tokyo (JP)**

(72) Inventor : **Hayashi, Kazuhiko**
**c/o Sony Corporation,**
**7-35 Kitashinagawa 6-chome**
**Shinagawa-ku, Tokyo (JP)**
Inventor : **Hayakawa, Masatoshi**
**c/o Sony Corporation,**
**7-35 Kitashinagawa 6-chome**
**Shinagawa-ku, Tokyo (JP)**
Inventor : **Aso, Koichi**
**c/o Sony Corporation,**
**7-35 Kitashinagawa 6-chome**
**Shinagawa-ku, Tokyo (JP)**

(74) Representative : **TER MEER - MÜLLER -**
**STEINMEISTER & PARTNER**
**Mauerkircherstrasse 45**
**D-81679 München (DE)**

## Description

CROSS-REFERENCES TO RELATED APPLICATIONS

This application is related to application entitled MAGNETIC RECORDING MEDIUM in which the inventors are Kazuhiko Hayashi, Masatoshi Hayakawa, Koichi Aso and Akihiko Okabe assigned to the assignee of this application and identified in the attorney's records as P90,1959.

BACKGROUND OF THE INVENTION

Field of the Invention

The present invention relates to a magnetic recording medium and, more particularly, to an in-plane magnetic recording medium.

Description of Related Art

In conventional thin-film magnetic recording media, there are known some examples which have magnetic thin films of alloys such as CoNi, CoP, CoPt and so forth which have isotropic properties with in-plane magnetization. Such magnetic thin films of CoNi and CoP have hard magnetic characteristics which are obtained by utilizing a columnar structure, including a coercive force Hc of about or less than 80 kA/m (1 (kOe)). Meanwhile, relative to the magnetic thin-film of CoPt, an example is disclosed in Japanese Patent Laid-open No. 58 (1983)-200513, wherein the film indicates a great coercive force Hc of more than 120 kA/m (1.5 (kOe)) in a film thickness of less than 30 nm (300Å), but in accordance with an increase of the film thickness, the coercive force Hc is rendered as small as 56 kA/m (700 (Oe)) or so.

There are also known some other magnetic thin films of alloys such as CoCr, CoMo, CoV and CoRu each developed for perpendicular magnetization. Although a large coercive force is attained in each of such magnetic thin films if a base temperature is raised to 150°C or so during deposition of the magnetic layer by sputtering or the like, the coercive force becomes as small as 24 kA/m (300 (Oe)) or so when the base temperature at the time of the layer deposition is kept at room temperature. Consequently, it is impossible to use a low-cost base of polyethylene terephthalate (PET) which has low heat resisting property.

In an attempt to solve these problems including the necessity of raising the base temperature during the film forming process, exemplary magnetic thin films for perpendicular magnetization with a sufficiently high saturation flux density and/or a great coercive force the present applicant has previously filed in Japanese Patent Publication Nos. 63 (1988)-226264 (EP-A-0 330 116, published 30/08/89) and 63 (1988) - 226267 (JP-A-2 073 511, published 13/03/90. The magnetic thin films disclosed therein are composed of CoPtB-O or CoPtBM-O alloy (where M is at least one element selected from Ti, Zr, V, Cr and so forth). Although each of such films has excellent characteristics as a perpendicular magnetic recording medium it is not possible to retain a sufficiently large coercive force as an in-plane magnetic recording medium for a contact-print master metal tape or the like.

JP-A-62 298 017 discloses a magnetic recording medium and its production. The magnetic recording medium is obtained by a evaporating a material for vapor deposition having a composition consisting of Ni (10-30 wt%), B (1.5-10wt%), O (0.2-2.7wt%), and Co (the balance). Such a medium provides for a maximum coercive force Hc of about 58.000 A/m.

OBJECT AND SUMMARY OF THE INVENTION

It is therefore an object of the present invention to provide an improved in-plane magnetic recording medium which is producible without the necessity of raising the base temperature during a thin-film forming process and which is still capable of retaining excellent magnetic characteristics. The magnetic recording medium of the present invention has a magnetic thin film whose composition is expressed as

$$(Co_a\ Pt_b\ B_c\ M_\delta)_{100\ -\ x}\ O_x$$

(where a, b, c, δ, x are atomic percent). In such composition, the following relationships exist:

$a = 100 - b - c - \delta$

$0 < b \leqq 50$

$0.1 \leqq c \leqq 30$

$0 \leqq \delta \leqq 30$

$0 < x \leqq 20$

And M is at least one element selected from Ti, Zr, V, Cr, Nb, Mo, Ta, W, Fe, Ni, Si, Al, Ge, Ga, In, Sn, Pb, Sb, Bi, P, Se, C, Zn, Cu, Ag, Au, Ru, Pd and Re. The magnetic thin film is formed by setting the incidence direction of atoms thereof oblique to a base. Due to the above feature, the magnetic recording medium can retain a great in-plane coercive force and a high saturation flux density.

The above and other features of the present invention will be apparent in detail from the following description which will be given with reference to the illustrative accompanying drawings.

BRIEF DESCRIPTION OF THE DRAWINGS

FIG. 1 illustrates forming a magnetic thin film;
FIGS. 2 and 3 are graphs which show magnetization curves of the magnetic recording media according to the present invention; and
FIG. 4 is a graph which shows a magnetization curve of a comparative example.

DESCRIPTION OF THE PREFERRED EMBODIMENTS

In the present invention, the magnetic thin film has a composition expressed by:
$$(Co_a Pt_b B_c M_\delta)_{100 - x} Ox \quad (1)$$
(where a, b, c, $\delta$, x are atomic percent). In the above composition (1), the following relationships exist:

$a = 100 - b - c - \delta$
$0 < b \leqq 50$
$0.1 \leqq c \leqq 30$
$0 \leqq \delta \leqq 30$
$0 < x \leqq 20$

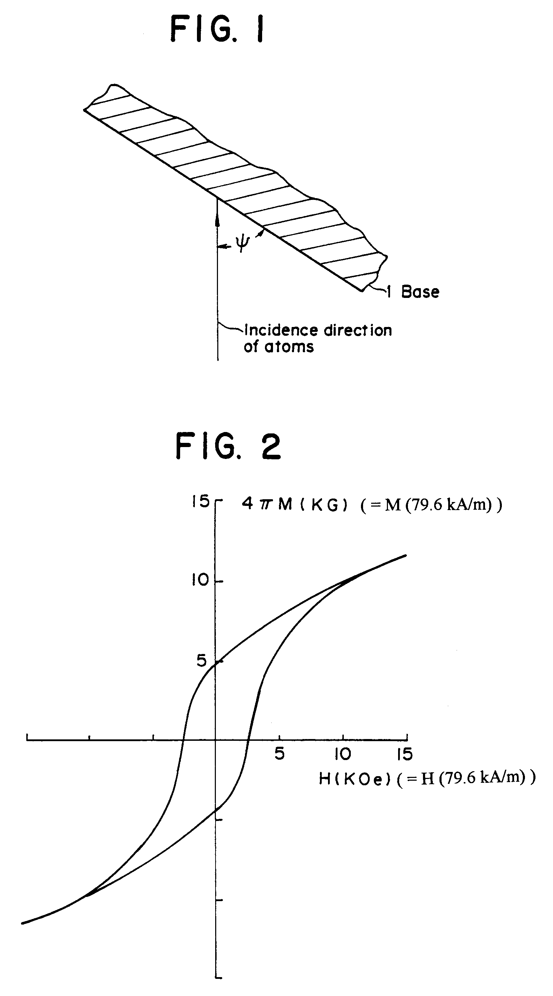

Further in the composition (1), M is at least one element selected from Ti, Zr, V, Cr, Nb, Mo, Ta, W, Fe, Ni, Si, Al, Ge, Ga, In, Sn, Pb, Sb, Bi, P, Se, C, Zn, Cu, Ag, Au, Ru, Pd and Re. Such magnetic film is formed on a base 1 by setting the incidence direction of atoms oblique thereto as illustrated in FIG. 1. More specifically, the surface of the base 1 is so set that the main trajectory direction (indicated by an arrow) of the atoms thereto forms an angle $\Psi$ within a range of $0° < \Psi < 90°$, preferably $40° < \Psi \leqq 70°$.

Hereinafter a description will be given of some exemplary embodiments which have been experimentally produced.

On a base 1 composed of a slide glass plate for example, a magnetic thin film was formed by the use of a magnetron type sputtering apparatus. The sputtering conditions were selectively determined as follows.

| | |
|---|---|
| Base temperature: | room temperature |
| Background vacuum degree: | $1,3 \times 10^{-4}$ Pa ($1 \times 10^{-6}$)Torr or less |
| Base etching (inverse sputtering) | high frequency waves, 300W; 2 minutes |
| Sputtering power: | high frequency waves, 300W |
| Sputtering gas pressure: | $0,27$ to $2.7$ Pa (2 to 20 mTorr) |
| Sputtering gas flow rate: | $10^{-6}$ to $3 \times 10^{-6}$ m³/s (60 to 180 SCCM) |
| Film forming speed: | approx. 70 nm/min (700 Å/min) |
| Magnetic thin film thickness : | 200 to 500 nm (2000 to 5000 Å) |

The target used in the above example was composed of CoPtBM alloy with a diameter of 4 inches and a thickness of 3.5 mm. The space between the target and the base was kept to be 70 mm at the center of the base for example, and the angle $\Psi$ formed by the base surface and the main trajectory direction of the atoms from the target was set within a range of $40° < \Psi < 70°$.

Embodiment 1

A magnetic thin film was formed on a base 1 under the above sputtering conditions at an angle $\Psi$ of 45° by the use of a target of CoPtB alloy. The composition of such magnetic thin film was $Co_{70.7}Pt_{22.1}B_{7.2}$, and the oxygen concentration therein was 13.8 atomic percent. FIG. 2 is a graph which shows the in-plane magnetization curve of the magnetic recording medium thus obtained.

Embodiment 2

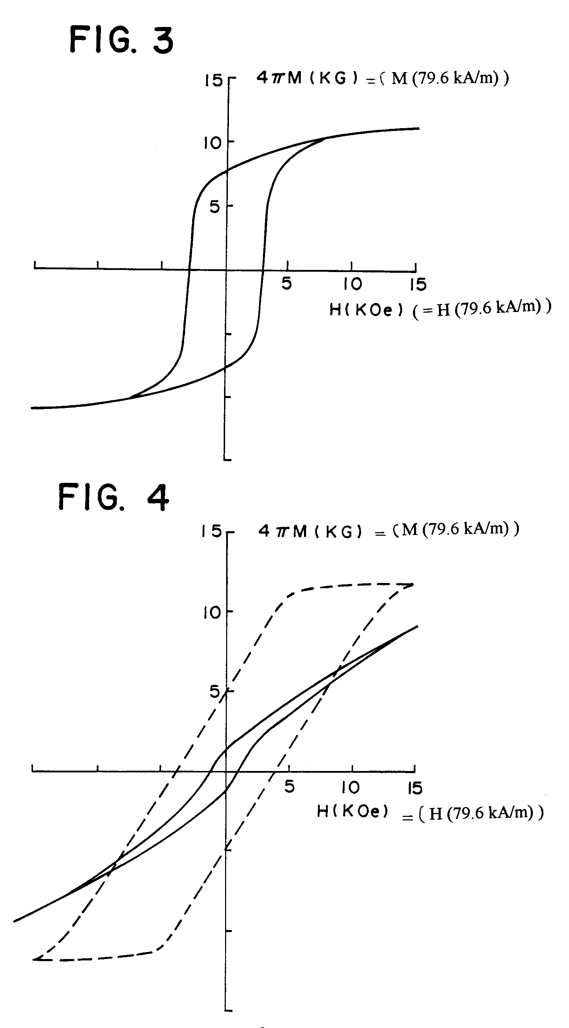

A magnetic thin film was formed on a base 1 under the above sputtering conditions at an angle $\Psi$ of 60° by the use of a target of CoPtB alloy. The composition of such magnetic thin film was $Co_{70.7}Pt_{22.1}B_{7.2}$, and the oxygen concentration therein was 15 atomic percent. The in-plane magnetization curve of the magnetic recording medium thus obtained is graphically shown in FIG. 3, wherein the in-plane magnetizable film has a large coercive force Hc″ of 240 kA/m (3 kOe) or so and a superior squareness ratio.

Comparative Example 1

A magnetic thin film was formed on a base 1 under the above sputtering conditions at an angle $\Psi$ of 0° by the use of a target of CoPtB alloy. The composition of such magnetic thin film was $Co_{70.7}Pt_{22.1}B_{7.2}$, and the oxygen concentration therein was 13 atomic percent. The in-plane magnetization curve of the magnetic recording medium thus obtained is represented by a solid line in FIG. 4. As will be obvious from a comparison with a perpendicular magnetization curve represented by a broken line in FIG. 4, the solid-line curve indicates an adequate characteristics as a perpendicular magnetizable film rather than as an in-plane magnetizable film. The magnetic characteristics were measured by the use of a sample vibrating type magnetometer with the application of a maximum magnetic field of 1.200 kA/m (15 kOe), and each film composition was analyzed by ICP (inductively coupled plasma analysis). Meanwhile, the oxygen concentration was measured in comparison with a standard sample whose composition was definitely known, by a combination of SIMS (secondary ion mass spectrometry) and EPMA (electron beam probe micro-analysis).

In each of the above examples, the magnetic thin film is composed of CoPtB alloy. However, the composition is not limited to such alloy alone, and other materials are usable including CoPtB-O alloy and CoPtBM-O alloy based on the composition (1) and the aforementioned composition range, where M is at least one element selected from Ti, Zr, V, Cr, Nb, Mo, Ta, W, Fe, Ni, Si, Al, Ge, Ga, In, Sn, Pb, Sb, Bi, P, Se, C, Zn, Cu, Ag, Au, Ru, Pd and Re. In any of such magnetic thin films, satisfactory characteristics can be attained as an in-plane magnetic recording medium by oblique incidence upon the base 1.

According to the present invention, a magnetic thin film having excellent characteristics for use as a perpendicular magnetizable film as disclosed in Japanese Patent Application Nos. 63 (1988)-226264 and -226267, oblique incidence upon the base 1 is executed to form a superior in-plane magnetizable film which retains large coercive force Hc″ of 240 kA/m (3000 (Oe)) to consequently obtain a satisfactory in-plane magnetic recording medium. In comparison with the present invention, the coercive force attained by using any other composition such as CoNi-O alloy or Co-O alloy is at most 120 kA/m (1500 (Oe)) even with execution of oblique incidence of atoms upon the base.

Thus, according to the in-plane magnetic recording medium of the present invention where a large coercive force and satisfactory saturated magnetization can be achieved, is applicable to any tape, sheet, or disk magnetic recording media. Since there is no necessity of heating the base at the time of forming a magnetic thin film, the degree of freedom in selecting a base material can be increased to consequently enable the use of a low cost material. Furthermore, as the coercive force is substantially nondependent on the film thickness in a range of at least 200 to 500 nm (2000 to 5000Å), it becomes possible to enhance the high output characteristics by increasing the film thickness.

Although the invention has been described with respect to preferred embodiments, it is not to be so limited as changes and modifications can be made which are within the full intended scope of the invention as defined by the appended claims.

**Claims**

1.  A magnetic recording medium with a magnetic thin film formed on a base by setting the incidence direction of atoms thereof oblique to the surface of the base, said thin film having a composition expressed as

$$(Co_a\ Pt_b\ B_c\ M_\delta)_{100-x}\ Ox$$

( in which a, b, c, $\delta$, x are atomic percent), wherein

a = 100 - b - c - $\delta$

$0 < b \leqq 50$

$0.1 \leqq c \leqq 30$

$0 \leqq \delta \leqq 30$

$0 < x \leqq 20$

and said M is at least one element selected from Ti, Zr, V, Cr, Nb, Mo, Ta, W, Fe, Ni, Si, Al, Ge, Ga, In, Sn , Pb , Sb , Bi , P, Se, C, Zn, Cu, Ag , Au, Ru, Pd and Re.

2. A magnetic recording medium according to claim 1, wherein the incidence angle $\Psi$ of atoms to the principal plane of said base is selectively set as $0° < \Psi < 90°$.

3. A magnetic recording medium according to claim 1, wherein the incidence angle $\Psi$ of atoms to the principal plane of said base is selectively set as $40° < \Psi \leqq 70°$.

4. A magnetic recording medium according to claim 1, wherein the thickness of said magnetic thin film is in a range of 200 to 500 nm (2000 to 5000 Å).

**Patentansprüche**

1. Magnetisches Aufzeichnungsmedium mit einem auf einem Träger durch Ausrichten der Einfallsrichtung der Atome schräg zu der Trägeroberfläche erzeugten magnetischen Dünnfilm mit der Zusammensetzung

$$(Co_a Pt_b B_c M_\delta)_{100 - x} Ox$$

(wobei a, b, c, $\delta$, x Atomprozente angeben), mit

a = 100 - b - c - $\delta$

$0 < b \leqq 50$

$0,1 \leqq c \leqq 30$

$0 \leqq \delta \leqq 30$

$0 < x \leqq 20$

und M mindestens ein Element ausgewählt aus Ti, Zr, V, Cr, Nb, Mo, Ta, W, Fe, Ni, Si, Al, Ge, Ga, In, Sn, Pb, Sb, Bi, P, Se, C, Zn, Cu, Ag, Au, Ru, Pd und Re ist.

2. Magnetisches Aufzeichnungsmedium nach Anspruch 1, **dadurch gekennzeichnet**, daß der Einfallswinkel $\psi$ der Atome auf die Hauptebene des Trägers wahlweise zu $0° < \psi < 90°$ einstellbar ist.

3. Magnetisches Aufzeichnungsmedium nach Anspruch 1, **dadurch gekennzeichnet**, daß der Einfallswinkel $\psi$ der Atome auf die Hauptebene des Trägers wahlweise zu $40° < \psi \leqq 70°$ einstellbar ist.

4. Magnetisches Aufzeichnungsmedium nach Anspruch 1, **dadurch gekennzeichnet**, daß die Dicke des magnetischen Dünnfilms in einem Bereich von 200 bis 500 nm (2000 bis 5000 Å) liegt.

**Revendications**

1. Support d'enregistrement magnétique ayant une couche magnétique mince formée sur une base par réglage de la direction d'incidence des atomes en direction oblique vers la surface de la base, la couche mince ayant une composition exprimée sous la forme

$$(Co_aPt_bB_cM_\delta)_{100 - x}O_x$$

(a, b, c, $\delta$ et x étant des pourcentages atomiques), avec a = 100-b-c-$\delta$ avec

$0 < b \leqq 50$

$0,1 \leqq c \leqq 30$

$0 \leqq \delta \leqq 30$

$0 < x \leqq 20$

et M est au moins un élément choisi parmi Ti, Zr, V, Cr, Nb, Mo, Ta, W, Fe, Ni, Si, Al, Ge, Ga, Is, Sn, Pb, Sb, Bi, P, Se, C, Zn, Cu, Ag, Au, Ru, Pd et Re.

2. Support d'enregistrement magnétique selon la revendication 1, dans lequel l'angle d'incidence $\psi$ des ato-

mes avec le plan principal de la base est réglé sélectivement dans la plage 0° < $\psi$ < 90°.

3. Support d'enregistrement magnétique selon la revendication 1, dans lequel l'angle d'incidence $\psi$ des atomes suivant le plan principal de la base est réglé sélectivement dans la plage 40° < $\psi \leqq$ 70°.

4. Support d'enregistrement magnétique selon la revendication 1, dans lequel l'épaisseur de la couche magnétique mince est comprise entre 200 et 500 nm (2 000 et 5 000 Å).

# FIG. 1

ψ

1 Base

Incidence direction
of atoms

# FIG. 2

4 π M ( K G )  ( = M (79.6 kA/m) )

H ( K O e ) ( = H (79.6 kA/m) )

# FIG. 3

$4\pi M \ (K G) = ( M \ (79.6 \ kA/m))$

$H(KOe) \ (= H \ (79.6 \ kA/m))$

# FIG. 4

$4\pi M \ (K G) = (M \ (79.6 \ kA/m))$

$H(KOe) \ = ( H \ (79.6 \ kA/m))$